# EUROPÄISCHE PATENTANMELDUNG

(11) **EP 2 455 721 A2**
(43) Veröffentlichungstag der Anmeldung: **23.05.2012**
(21) Anmeldenummer: 11188327.8
(22) Anmeldetag: 08.11.2011
(51) Int. Cl.: G01D 5/249, G01D 5/347

(54) **Absolutwertgeber mit Sprungstelle in kodierter Absolutlage**

(30) Priorität: 22.11.2010 DE 102010061737
(71) Anmelder: Baumer Innotec AG, 8501 Frauenfeld (CH)
(72) Erfinder: Kirchberger, Roland, 10787 Berlin (DE); Loharens, Axel, 13189 Berlin (DE); Hiller, Bernhard, 13465 Berlin (DE); Schneider, Michael, 78462 Konstanz (DE)
(74) Vertreter: Strauss, Steffen

(57) **Zusammenfassung**

Die Erfindung betrifft einen Absolutwertgeber (1) zur Bestimmung einer Absolutlage (P) eines Körpers (6), mit einer Maßverkörperung (5), sowie ein Verfahren zur Bestimmung der Absolutlage (P) zweier Körper (3, 4, 6) relativ zueinander. Um den Absolutwertgeber (1) möglichst flexibel einsetzen und Montagefehler der Maßverkörperung (5) erkennen zu können, ist erfindungsgemäß vorgesehen, dass eine Kodierung (K) der Maßverkörperung (5) in ihrem Verlauf eine Diskontinuität (9) aufweist und zur Bestimmung der Absolutlage (P) innerhalb der Diskontinuität (9) die Kodierung (K) außerhalb der Diskontinuität (9) abgetastet wird und die abgetasteten Absolutwerte (W) mit einem Offsetwert (A) verknüpft werden.

## Beschreibung

Die Erfindung betrifft einen Absolutwertgeber zur Bestimmung einer Absolutlage eines Körpers relativ zum Absolutwertgeber, mit wenigstens einer sich entlang eines Messweges erstreckenden Maßverkörperung, die eine Kodierung der Absolutlage mit Messlagewerten aufweist, und mit wenigstens zwei Sensoren, durch die im Betrieb die Kodierung abtastbar ist.

Ferner betrifft die Erfindung ein Verfahren zur Bestimmung einer Absolutlage zweier Körper relativ zueinander, bei dem eine Absolutlagewerte enthaltende Kodierung der Absolutlage mehrfach abgetastet und ein für die Absolutlage repräsentatives Absolutlagesignal erzeugt und ausgegeben wird.

Absolutwertgeber mit Maßverkörperungen sind allgemein bekannt. Physikalische oder körperliche Absolutlagen werden durch diese Absolutwertgeber ermittelt und als Absolutlagewerte dargestellt. Um an jeder Stelle entlang eines Messweges die Absolutlage bestimmen zu können, sind die Maßverkörperungen lückenlos ausgebildet. Beispielsweise werden ringförmige Maßverkörperungen auf Wellen aufgesetzt, um deren Drehlage absolut bestimmen zu können. Eine solche Maßverkörperung umfasst in der Regel eine einzige durchgehende Kodierung. Absolutwertgeber unterscheiden sich von Inkrementalgebern dadurch, dass sie die Absolutlage des Körpers beim Einschalten, sobald sie mit Energie versorgt sind, an einer Ausgangsschnittstelle zur Verfügung stellen können. Die Erfassung erfolgt vorzugsweise unmittelbar durch Abtasten der Kodierung der Maßverkörperung. Ein Inkrementalgeber stellt dagegen nicht ein für die Absolutlage, sondern ein für eine Lageänderung repräsentatives Signal an einer Ausgangsschnittstelle bereit.

Insbesondere bei der Absolutlagebestimmung von großen Körpern, beispielsweise von einer einen Generator einer Windkraftanlage antreibenden Welle, sind einteilige Maßverkörperungen unpraktisch, da sie sehr groß und nur mit viel Aufwand herzustellen und zu montieren sind. Ferner können Maßabweichungen der Welle mit einer einteiligen Maßverkörperung nicht ohne Weiteres ausgeglichen werden.

Des Weiteren sind Maßverkörperungen für unregelmäßige Messwege schwierig herzustellen. Um beispielsweise Bewegungen des Körpers entlang eines Messweges, der aus translatorischen und/oder rotatorischen Bewegungen zusammengesetzt ist, herzustellen, müsste eine entsprechend und womöglich unregelmäßig geformte Maßverkörperung einteilig hergestellt werden. Eine Fertigung einer solchen Maßverkörperung ist jedoch sehr anfällig für Fertigungstoleranzen.

Es ist daher die Aufgabe der Erfindung, die bekannten Absolutwertgeber so zu verbessern, dass sie flexibler eingesetzt werden können und geringere Anforderungen an die Anbringung und den Aufbau der Maßverkörperung stellen.

Für den eingangs genannten Absolutwertgeber wird die Aufgabe dadurch gelöst, dass die Kodierung in ihrem Verlauf wenigstens eine Diskontinuität aufweist.

Für das eingangs genannte Verfahren wird die Aufgabe dadurch gelöst, dass die Kodierung in ihrem Verlauf eine Diskontinuität aufweist und zur Bestimmung der Absolutlage innerhalb der Diskontinuität einer der Messlagewerte der Kodierung außerhalb der Diskontinuität mit einem Offsetwert verknüpft wird.

Die erfindungsgemäße Lösung ist konstruktiv einfach und hat den Vorteil, dass Diskontinuitäten der Kodierung der Maßverkörperung eine flexiblere Montage der Maßverkörperung erlauben und durch den Absolutwertgeber überbrückbar sind und dieser auch im Bereich der Diskontinuitäten gültige Messlagewerte liefern kann. Dies ist sogar möglich, wenn die kodierte Absolutlage im Bereich der Diskontinuität eine Absolutlage des Körpers nicht repräsentiert bzw. die Kodierung im Bereich der Diskontinuität unstetig oder lückenhaft ist.

Die erfindungsgemäße Lösung kann durch verschiedene, jeweils für sich vorteilhafte, beliebig miteinander kombinierbare Ausgestaltungsformen weiter verbessert werden. Auf diese Ausgestaltungen und die mit ihnen verbundenen Vorteile wird im Folgenden eingegangen.

So kann in einer Weiterbildung die Diskontinuität eine Lücke in der Maßverkörperung und/oder eine Sprungstelle in der Kodierung umfassen. Lücken in der Maßverkörperung ermöglichen einen Längen- oder Positionsausgleich, in dem die Kodierung über eine insbesondere unbekannte Länge unterbrochen ist. Sie erlauben es, die Maßverkörperung an die unbekannte Geometrie des Körpers anzupassen, dessen Lage bestimmt werden soll. Hierzu kann die Maßverkörperung flexibel und womöglich sogar entlang des Messweges elastisch verformbar aus-gestaltet sein. Ausdehnungen des Messweges können durch die Lücke kompensiert werden, selbst wenn die Maßverkörperung zumindest entlang des Messweges im Wesentlichen unelastisch ausgeformt ist. Ferner kann die Lücke auch durch Beschädigung oder durch Fehlstellen hervorgerufen werden. Sprungstellen können zum Beispiel durch eine Fehlmontage der Maßverkörperung entlang des Messweges entstehen. Sie entstehen auch, wenn Abschnitte mit unterschiedlichen Kodierungen aneinanderstoßen.

Die Kodierung kann gemäß einer weiteren vorteilhaften Ausgestaltung aus mehreren Kodierabschnitten zusammengesetzt sein, die entlang des Messweges hintereinander angeordnet sind und von denen wenigstens zwei durch die wenigstens eine Diskontinuität voneinander getrennt sind. Die Kodierung aufeinanderfolgender Kodierabschnitte kann die Absolutlage im Wesentlichen durchgehend wiedergeben, d.h. aufeinanderfolgende Kodierabschnitte weisen keine Sprungstele an der Diskontinuität auf, so dass der Absolutwertgeber zumindest im Betrieb jederzeit die Absolutlage erkennen kann.

Damit die Kodierung einfach und beispielsweise aus einem Bausatzsystem zusammengesetzt werden kann, können die Kodierabschnitte alternativ identisch kodiert sein. Beispielsweise können mehrere oder alle Kodierabschnitte der Maßverkörperung bei einem minimalen Messlagewert von beispielsweise Null beginnen und bei einem identischen Maximalwert enden. Beim Zusammensetzen der Kodierung braucht die Reihenfolge der Kodierabschnitte somit nicht berücksichtigt zu werden. Zwischen den Kodierabschnitten treten an der Diskontinuität Sprungstellen auf, die durch den Übergang vom minimalen zum maximalen Messlagewert oder umgekehrt hervorgerufen werden.

Passiert eine Diskontinuität zwischen zwei Kodierabschnitten einen der Sensoren des Absolutwertgebers, kann es vorteilhaft sein, wenn der Absolutwertgeber dieses Passieren der Diskontinuität erfasst und wenigstens zeitweise speichert. Damit ist gewährleistet, dass der Absolutwertgeber die Absolutlage nicht nur innerhalb des Kodierabschnittes, sondern in allen Kodierabschnitten bestimmen kann, auch wenn zumindest einige der Kodierabschnitte identisch kodiert sind.

Insbesondere kann die Diskontinuität bei einem Drehgeber als ein Kodierelement zur Erfassung der Anzahl der vollen Umdrehungen ausgestaltet sein und genutzt werden. Bei dieser Ausgestaltung erhält man einen Multiturn-Drehgeber, dessen Absolutsignal aus einer Singleturn-Position und einer Multiturn-Position zusammengesetzt ist. In der Singleturn-Position ist die Position innerhalb einer vollen Umdrehung codiert und sie wird mithilfe der Kodierabschnitte der Maßverkörperung erfasst. Die Multiturn-Position erfasst die Anzahl der vollen Umdrehungen, gegebenenfalls unter Berücksichtigung der Drehrichtung.

Um die Maßverkörperung möglichst einfach zusammensetzen zu können, können die Kodierabschnitte als separate einstückige Teile der Maßverkörperung ausgeformt sein. Jedes der Teile kann insbesondere genau einen Kodierabschnitt aufweisen, so dass die Diskontinuität an wenigstens einem Übergang zwischen zwei Teilen bzw. Kodierabschnitten angeordnet ist. Die Teile können so dimensioniert und ausgestaltet sein, dass sie durch einen Monteur einfach entlang des Messweges angeordnet und am Körper befestigt werden können. Große oder unregelmäßige Messwege können so einfach und ohne großen Aufwand durch mehrere Teile abgebildet werden.

Der Absolutwertgeber kann einen Kompensator zur Kompensation der Diskontinuität aufweisen, wobei der Kompensator signalübertragend eingangsseitig mit den Sensoren und ausgangsseitig mit einer Absolutlagewertausgabeeinheit des Absolutwertgebers verbunden sein kann. An einem Signalausgang der Absolutlagewertausgabeeinheit können die von den Messwerten abgeleiteten und die Absolutlage repräsentierenden Absolutlagewerte anliegen. Die Absolutlagewerte können im Absolutlagesignal enthalten über den Signalausgang ausgebbar sein. Im Kompensator können die jeweils von einem der Sensoren abgetasteten Messlagewerte mit einem Kompensationsfaktor und gegebenenfalls dem Offsetwert verknüpft werden, wodurch durch die Diskontinuität erzeugte Abweichungen der Messlagewerte von den Absolutlagen ausgleichbar sind. Der Kompensationsfaktor kann für jeden Kodierabschnitt individuell, beispielsweise bei einem Trainingslauf während der Inbetriebnahme des Absolutwertgebers, ermittelt werden und von der Größe der Diskontinuität abhängen.

Werden die Teile entlang des Messweges so montiert, dass diese beispielsweise nicht aneinanderstoßend, sondern mit einem die Lücke bildenden Abstand zueinander am Körper befestigt werden, kann der Absolutwertgeber dennoch die Absolutlage bestimmen. Hierzu können die Sensoren entlang der Maßverkörperung bzw. des Messweges beabstandet zueinander angeordnet sein. Der Abstand der Sensoren zueinander kann vorteilhaft zumindest der Ausdehnung der Lücke entsprechen. Besonders vorteilhaft ist, wenn der Abstand der Sensoren zueinander entlang des Messweges größer als die Ausdehnung der Lücke ist. Somit ist gewährleistet, dass wenigstens einer der Sensoren jederzeit gültige Messwerte eines Kodierabschnittes ablesen kann. Fehlmontagen der Teile entlang des Messweges gefährden die Inbetriebnahme des Absolutwertgebers zumindest in gewissen Grenzen nicht. Ferner können Maßtoleranzen des Körpers, zum Beispiel ansonsten unakzeptable Toleranzen des Durchmessers der Welle, durch gezielten Einsatz der Lücken ausgeglichen werden. Die Länge der Lücke entlang des Messweges kann zum Ausgleich der Toleranzen variiert werden.

Zur Kompensation der Diskontinuität kann die Kodierung beispielsweise gleichzeitig an einer ersten und einer zweiten Messstelle durch jeweils einen der Sensoren abgetastet werden, wobei die Messstellen entlang der die Kodierung tragenden Maßverkörperung voneinander beabstandet angeordnet sind. Der Abstand der Messstellen zueinander kann dabei durch den Abstand der Sensoren voneinander vorgegeben sein. Liefert einer der Sensoren ungültige Messlagewerte, kann die Position dieses Sensors mit Bezug auf den Körper anhand der durch den anderen Sensor bestimmten Messlagewerte ermittelt werden. Hierzu sind die von dem anderen Sensor ermittelten Messlagewerte mit dem Offsetwert und gegebenenfalls mit dem Kompensationsfaktor zu verknüpfen. Der Offsetwert kann dem Abstand der Messstellen bzw. der Sensoren zueinander entsprechen und in einer Speichereinheit des Absolutwertgebers abgelegt sein. Die Speichereinheit kann signalübertragend eingangsseitig mit zumindest einem der Sensoren und/oder ausgangsseitig mit einer Absolutlagewertausgabeeinheit des Absolutwertgebers verbunden sein kann. Solange zumindest einer der Sensoren gültige Messlagewerte von der Maßverkörperung abtastet, ist die Absolutlage des Körpers relativ zu jedem Sensor des Absolutwertgebers bestimmbar.

Um zu entscheiden, welcher Sensor zur Bestimmung der Absolutlage abgefragt werden soll, können Messlagewerte der ersten Messstelle für eine vorbestimmte Menge von Messlagewerten verwendet werden. Für andere Messlagewerte der ersten Messstelle können Messlagewerte der zweiten Messstelle für die Bestimmung der Absolutlage verwendet werden. Beispielsweise kann der erste Sensor für Messlagewerte abgefragt werden, die in einem vorbestimmten Abstand von beispielsweise zehn Messlagewerten von der Diskontinuität angeordnet sind. Ist der erste Sensor näher als vorgegeben an der Diskontinuität, so werden die Messlagewerte des zweiten Sensors verwendet. Hierzu kann eine Umschalteinrichtung vorgesehen sein, welche in Abhängigkeit von dem von einem der wenigstens zwei Sensoren erfassten Messlagewert auf den wenigstens einen anderen Sensor umschaltet. Durch das Umschalten wird der Ausgang des anderen Sensors ausgewertet.

Alternativ oder zusätzlich kann die Plausibilität der Kodierung zumindest einer der Messstellen, beispielsweise der ersten Messstelle, geprüft werden. Basierend auf dem Ergebnis der Prüfung kann die Kodierung der jeweils anderen und beispielsweise der zweiten Messstelle zur Bestimmung der Absolutlage verwendet werden. Insbesondere im Bereich der Diskontinuität, aber auch bei Beschädigung der Maßverkörperung oder Fehlern in der Kodierung, können die kodierten Messlagewerte nicht plausibel sein. Diese nicht plausiblen Messlagewerte an der einen Messstelle beeinträchtigen die Bestimmung der des Absolutlage jedoch nicht, wenn an der anderen Messstelle plausible bzw. gültige Messlagewerte vorliegen.

Falls der Körper im ausgeschalteten Zustand des Absolutwertgebers bewegt werden sollte, könnte der Absolutwertgeber die Absolutlage des Körpers verlieren und nach einer erneuten Inbetriebnahme nicht mehr richtig bestimmen, da der Absolutwertgeber zum Beispiel bei identisch ausgebildeten Kodierabschnitten nicht mehr bestimmen könnte, welcher Kodierabschnitt zur Bestimmung der Absolutlage aktuell durch die Sensoren abgetastet wird. Folglich kann der Absolutwertgeber in einer weiteren vorteilhaften Ausgestaltung einen Sensor umfassen, der ein Passieren von Diskontinuitäten auch im ausgeschalteten Zustand des Absolutwertgebers detektiert. Der Sensor kann signalübertragend mit einem nichtflüchtigen Speicher verbunden sein, der die Bewegung der Diskontinuität vorbei am Sensor und entlang des Messweges dokumentiert.

Die Funktion dieses Sensors kann in einer weiteren vorteilhaften Ausgestaltung in einem der beiden Sensoren abgebildet sein. Alternativ kann der Sensor als ein separater Sensor ausgebildet sein. Insbesondere kann der Sensor einen Betriebsenergie für den nichtflüchtigen Speicher erzeugenden Generator umfassen und ein Signal an den nichtflüchtigen Speicher ausgeben, wenn er die Diskontinuität passiert. Beim Passieren der Diskontinuität kann ein Speicherwert in der nichtflüchtigen Speichereinheit geändert werden. Die im Signal enthaltene Energie kann genutzt werden, um Werte des nichtflüchtigen Speichers zu ändern, auch wenn der Absolutlagewertgeber ausgeschaltet ist. In der Diskontinuität und insbesondere in der Lücke kann zumindest ein den Generator antreibendes Bauelement, beispielsweise ein Magnet, angeordnet sein.

Auch eine Fehlmontage der Maßverkörperung senkrecht zum Messweg kann zu einer ungenau bestimmten Absolutlage führen. Ist die Maßverkörperung beispielsweise an einem kreiszylindrischen Körper, etwa einer Welle oder einer Nabe, angebracht, so kann es vorkommen, dass die Maßverkörperung im Vergleich zu einer optimalen Lage auf dem Messweg radial versetzt angeordnet ist. Bei einem flächigen oder gewölbten Körper kann die fehlmontierte Maßverkörperung senkrecht zum Körper versetzt montiert sein. Dieses Problem kann sowohl bei einer einstückig handhabbaren Maßverkörperung mit nur einem Kodierabschnitt als auch bei einer mehrere Kodierabschnitte oder Teile umfassenden Maßverkörperung auftreten und zu Messungenauigkeiten führen. Die im Folgenden dargestellte Lösung dieses Problems ist unabhängig von den bisher diskutierten Ausgestaltungen des Absolutwertgebers und insbesondere der Maßverkörperung vorteilhaft und kann auch separat realisiert verwendet werden.

So kann der Absolutwertgeber eine Prüfeinheit zur Erkennung von Montagefehlern der Maßverkörperung insbesondere senkrecht zu deren Verlauf bzw. senkrecht zum Messweg aufweisen. Die Prüfeinheit kann eingangsseitig signalübertragend mit den beiden Sensoren verbunden sein und an ihrem Signalausgang ein für den Montagefehler repräsentatives Fehlersignal ausgeben.

Montagefehler der mit der Kodierung versehenen und am Körper montierten Maßverkörperung können somit insbesondere senkrecht zur Maßverkörperung bzw. zum Messweg oder zum Körper erkannt werden, indem wenigstens zwei sich voneinander unterscheidende Messlagewerte gleichzeitig abgetastet und einem Verarbeitungsschritt zugeführt werden, durch den ein für den Montagefehler repräsentatives Fehlersignal in der Prüfeinheit erzeugt werden kann.

Beispielsweise können die Messlagewerte der zueinander versetzten Messstellen abgetastet und zur Erzeugung des Fehlersignals lagekorrigiert einem weiteren Verfahrensschritt zugeführt werden. Zur Lagekorrektur kann der Offsetwert und/oder der Kompensationsfaktor mit Messlagewerten einer der Messstellen verknüpft werden. Zum Beispiel kann der Offsetwert und/oder der Kompensationsfaktor von den gemessenen Messlagewerten subtrahiert oder zu diesen addiert werden. Für diesen Verfahrensschritt kann die Prüfeinheit ein Additions- oder ein Subtraktionsmodul aufweisen, das eingangsseitig mit einem der Sensoren verbunden ist und an dessen Ausgang lagekorrigierte Messlagewerte anliegen.

Die lagekorrigierten Messlagewerte des einen Sensors entsprechen im Idealfall, d.h. bei einer perfekt montierten Maßverkörperung, den Messlagewerten des anderen Sensors. Eine Fehlmontage der Maßverkörperung senkrecht zum Messweg bzw. zum Körper kann jedoch dazu führen, dass die lagekorrigierten Messlagewerte nicht den Messlagewerten des anderen Sensors entsprechen. Zur Bestimmung der Art und Größe der Fehlmontage können die lagekorrigierten Messlagewerte beispielsweise direkt voneinander subtrahiert und aus dem resultierenden Ergebnis ein Fehlersignal abgeleitet werden. Im Idealfall wäre das Ergebnis dieser Berechnung für alle Messlagewerte konstant und insbesondere 0. Im Fall einer Fehlmontage kann das Ergebnis jedoch von dem konstanten Wert abweichen.

Alternativ können Abweichungen der Messlagewerte von idealen Messlagewerten bestimmt werden und diese Abweichungen folglich zur Ermittlung des Fehlersignals ausgewertet und insbesondere voneinander subtrahiert werden.

Werden mehrere Messlagewerte eines jeden der Sensoren einem dieser Verfahren unterzogen, so ergibt sich ein für die Art und Größe der Fehlmontage repräsentativer Wertverlauf, der als Fehlersignal für eine Auswertung ausgegeben oder einem Benutzer angezeigt werden kann. Alternativ kann der Absolutwertgeber die Art und Größe der Fehlmontage anhand des Wertverlaufs bzw. des Fehlersignals selbsttätig bestimmen.

Ein alternatives Verfahren zur Bestimmung der Fehlmontage beinhaltet, dass von den Messlagewerten der beiden Messstellen Geschwindigkeitswerte abgeleitet werden, anhand derer das Fehlersignal erzeugt wird. Zur Erzeugung des Fehlersignals können die Geschwindigkeitssignale Relativgeschwindigkeiten der beiden Körper zueinander repräsentieren, die wiederum lagekorrigiert voneinander subtrahiert werden können. Das Ergebnis dieses Verfahrensschrittes kann wieder als ein für die Fehlmontage repräsentatives Fehlersignal ausgegeben oder automatisch ausgewertet werden.

Zur Bestimmung der Absolutlage der beiden Körper zueinander kann es notwendig sein, die gemessenen Messlagewerte in die Absolutlagewerte umzurechnen. Hierzu kann der Absolutwertgeber, zum Beispiel nach der Montage der Maßverkörperung, wenigstens einmal vollständig entlang des Messweges relativ zum Körper bewegt und die durch die Sensoren abgetasteten Messlagewerte gespeichert werden. Anhand der gespeicherten Messlagewerte können Fehlmontagen der Maßverkörperung bzw. der einzelnen Teile senkrecht zum Messweg sowie die Größe der Diskontinuitäten ermittelt werden. Hieraus kann eine Umrechnungsvorschrift zur Bestimmung der Absolutlage generiert werden - zum Beispiel in Form einer den Offsetwert und die Kompensationsfaktoren berücksichtigenden Umrechnungsvorschrift oder einer Konkordanzliste. Ferner kann die Menge von Messlagewerten bestimmt werden, für welche ein ausgewählter Sensor Werte zur Bestimmung der Absolutlage liefern soll.

Der Fehler einer in sich geschlossenen Maßverkörperung muss bei einem Absolutwertgeber nach einer vollständigen Umdrehung zurück zum Anfangswert wieder Null sein, weil die Maßverkörperung an dieser Stelle wieder den Anfangswert aufweist. Ein eventuell verbleibender Restfehler kann auf die Diskontinuität und/oder auf die gesamte Maßverkörperung aufgeteilt werden.

Im Folgenden ist die Erfindung beispielhaft anhand von Ausführungsbeispielen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde. Es zeigen:
- Fig. 1: eine schematische Darstellung eines ersten Ausführungsbeispiels eines erfindungsgemäßen Absolutwertgebers;
- Fig. 2: eine schematische Darstellung von Messlagewerten, die mit dem Absolutwertgeber des Ausführungsbeispiels der Fig. 1 erzeugt sind;
- Fig. 3: eine schematische Darstellung von Messlagewerten, die mit einem Absolutwertgeber gemäß einem weiteren Ausführungsbeispiel erzeugt sind;
- Fig. 4, 5: schematische Darstellungen von Ausführungsbeispielen von Verfahren zur Bestimmung von Absolutlagewerten anhand von Messlagewerten;
- Fig. 6: eine schematische Darstellung eines weiteren Ausführungsbeispiels des erfindungsgemäßen Absolutwertgebers mit fehlmontierter Maßverkörperung;
- Fig. 7: eine schematische Darstellung von verarbeiteten Messlagewerten, die mit dem Absolutwertgeber des Ausführungsbeispiels der Fig. 4 ermittelt sind;
- Fig. 8: eine schematische Darstellung von Funktionseinheiten des erfindungsgemäßen Absolutwertgebers in einem weiteren Ausführungsbeispiel;
- Fig. 9: eine schematische Darstellung eines Verfahrens zur Bestimmung einer Fehlmontage einer Maßverkörperung.

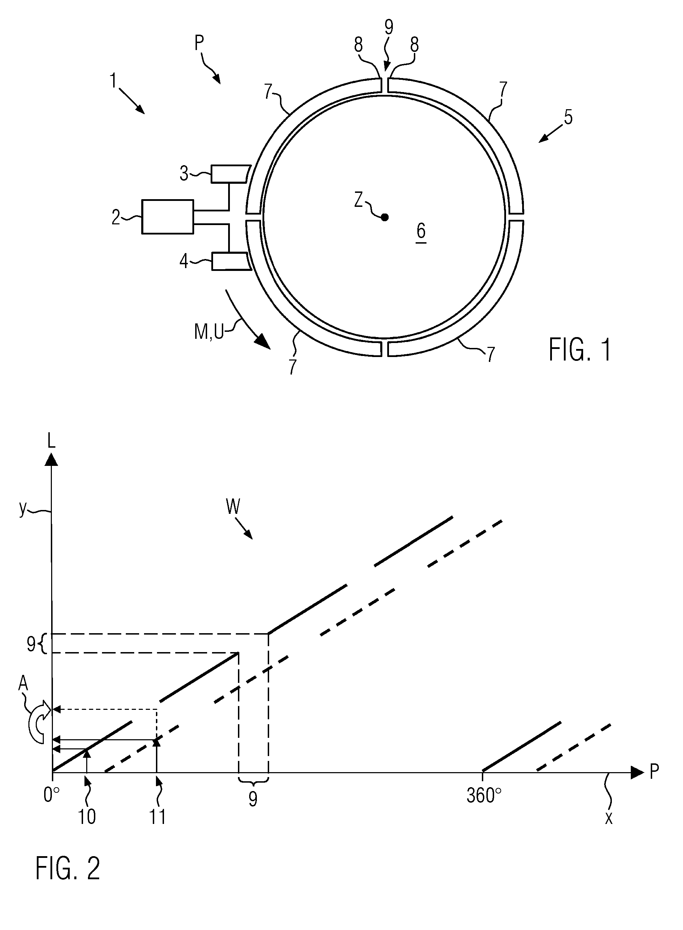

Zunächst sind Aufbau und Funktion eines Absolutwertgebers 1 mit Bezug auf das Ausführungsbeispiel der Fig. 1 beschrieben. Der Absolutwertgeber 1 kann eine Auswerteeinheit 2 aufweisen, die signalübertragend mit einem ersten und einem zweiten Sensor 3, 4 verbunden sein kann. Ferner kann der Absolutwertgeber 1 wenigstens eine Maßverkörperung 5 umfassen. Die Maßverkörperung 5 kann an einem Körper 6 befestigbar sein, dessen Absolutlage P mit Bezug auf den Absolutwertgeber 1 bzw. mit Bezug auf einen der beiden Sensoren 3, 4 bestimmt werden soll. Hierzu werden in der Maßverkörperung 5 als Messlagewerte kodierte Absolutlagen P durch wenigstens einen der Sensoren 3, 4 ausgelesen und aus den Messlagewerten die Absolutlage P abgeleitet.

Im gezeigten Ausführungsbeispiel ist die Maßverkörperung 5 an einem kreiszylindrisch ausgebildeten Körper 6 befestigt. Der Körper 6 kann als eine Nabe oder Welle einer Windkraftanlage ausgebildet und beispielsweise die Rotornabe oder eine einen Generator antreibende Welle sein. Selbstverständlich kann der erfindungsgemäße Absolutwertgeber 1 auch mit anderen Wellen, Naben oder anders geformten und womöglich nicht nur rotatorisch bewegten Körpern 6 verwendet werden. Die Maßverkörperung 5 kann entlang eines Messweges M angeordnet sein, wobei der Messweg M im hier dargestellten Ausführungsbeispiel parallel zu einer Umfangsrichtung U auf einer Mantelfläche des Körpers 6 verläuft. Der Absolutwertgeber 1 ist also als ein Drehwertgeber dargestellt.

Alternativ kann der Absolutwertgeber 1 auch Absolutlagen P von translatorisch bewegten Körpern 6 bestimmen. Auch Kombinationen von translatorischen und rotatorischen Bewegungen des Körpers 6 mit Bezug auf den Absolutwertgeber 1 bzw. relativ zu dessen Sensoren 3, 4 kann der Absolutwertgeber 1 bestimmen. Hierzu kann die Maßverkörperung 5 entlang eines beliebig vorbestimmten Messweges M angeordnet sein.

Um die Maßverkörperung 5 entlang des gewünschten Messweges M einfach und unproblematisch anordnen zu können, kann die Maßverkörperung 5 mehrere einstückige Teile 7 umfassen, die separat am Körper 6 bzw. entlang des Messweges M angeordnet werden können. Hierdurch können auch Maßverkörperungen 5 an Körpern 6 montiert werden, selbst wenn der Körper 6 verhältnismäßig groß ist. Beispielsweise kann eine Welle für den Generator des Windrades einen Durchmesser von bis zu einem Meter oder mehr aufweisen. Einzelne Teile 7 der Maßverkörperung 5 können also womöglich von einem einzelnen Monteur einfach am Mantel der Welle angebracht werden.

Im hier gezeigten Ausführungsbeispiel umfasst die Maßverkörperung 5 beispielsweise vier Teile 7, die entlang des Messweges M so hintereinander angeordnet sind, dass der Körper 6 in seiner Umfangsrichtung U im Wesentlichen von den die Maßverkörperung 5 ausbildenden Teilen 7 umgeben ist.

Entlang des Messweges M können die Teile 7 die Kodierung der Absolutlage P des Körpers 6 aufweisen, die von den beiden Sensoren 3, 4 abtastbar ist. Die Kodierung kann die Messlagewerte aufweisen, die diskrete Werte annehmen können. Entlang des Messweges M können Enden 8 der Teile 7 entlang des Messweges M bzw. in Umfangsrichtung U aneinanderstoßend oder voneinander beabstandet angeordnet sein. Alternativ zu separat handhabbaren Teilen 7 kann die Maßverkörperung 5 auch aus mehreren Teilen 7 gefertigt sein, die einstückig handhabbar miteinander verbunden sind.

Es kann sein, dass die Absolutlage P des Körpers 6 zwischen zwei benachbarten Teilen 7 bzw. zwischen deren aufeinander zu weisenden Enden 8 zweier Teile 7 nicht wie erwartet durch Messlagewerte repräsentiert ist. Beispielsweise können die Messlagewerte im Bereich der aneinander angrenzenden Enden 8 zweier Kodierungen der Teile 7 eine unerwartet große Differenz zueinander aufweisen, die den wahren, physischen Abstand der kodierten Messlagewerte im Bereich der benachbarten Enden 8 zueinander nicht repräsentiert. Diese Differenz kann zu einer unerwarteten Sprungstelle der Kodierung führen. Ferner kann die Kodierung zumindest zwischen den benachbarten aber voneinander beabstandeten Enden 8 unterbrochen sein. Eine solche Lücke in der Kodierung kann beispielsweise durch Enden 8 zweier Teile 7 hervorgerufen sein, die voneinander beabstandet angeordnet sind. Auch kann es vorkommen, dass die Teile 7 im Bereich der Enden 8 nicht oder nicht richtig kodiert sind. Sowohl die den wahren Abstand nicht repräsentierende Differenz als auch die Lücke kann der Absolutwertgeber 1 als eine Diskontinuität 9 in der Kodierung erfassen.

Um die Absolutlage P des Körpers 6 auch innerhalb der Diskontinuität 9 aufnehmen zu können, können die Sensoren 3, 4 so entlang des Messweges M angeordnet sein, dass wenigstens einer der beiden Sensoren 3, 4 immer gültige Messlagewerte außerhalb der Diskontinuität 9 von der Maßverkörperung 5 abnehmen kann. Dabei können die Sensoren 3, 4 entlang des Messweges M wenigstens so weit voneinander beabstandet angeordnet sein, dass der Abstand der Sensoren 3, 4 zueinander zumindest den geometrischen Abmessungen der Diskontinuität 9 bzw. dem wahren Abstand entlang des Messweges M entspricht. Insbesondere kann der Abstand der Sensoren 3, 4 zueinander größer als die geometrischen Abmessungen der Diskontinuität 9 sein. Der Abstand der beiden Sensoren 3, 4 kann dabei vorgegeben oder bei der Inbetriebnahme ermittelt und im Absolutwertgeber 1 bekannt sein.

Die Maßverkörperung 5 kann alternativ aus einem einzelnen Stück bestehen, das entlang des Messweges M angeordnet und beispielsweise um den Körper 6 herumgewickelt sein kann. Entlang des Messweges M bzw. im hier gezeigten Ausführungsbeispiel in Umfangsrichtung U des Körpers 6 können die beiden Enden 8 einer solchen Maßverkörperung 5 entlang des Messweges M einander gegenüberliegend angeordnet sein. Bei einer vollständigen Rotation des Körpers 6 um seine Längsachse Z wird bei einer derartig ausgestalteten Maßverkörperung 5 nur eine Diskontinuität 9 pro Rotation ermittelt, die im Bereich der Enden 8 bzw. dazwischen angeordnet ist. Diese Maßverkörperung 5 kann also eine durchgehende Kodierung aufweisen, die in einem einzelnen Kodierabschnitt entlang des Messweges M angeordnet und an nur einer Stelle durch die Diskontinuität 9 unterbrochen ist. Umfasst die Maßverkörperung 5 mehrere Teile 7, so kann jedes der Teile 7 einen solchen Kodierabschnitt aufweisen, in dem die Absolutlage P eindeutig kodiert ist. Die Teile 7 können identisch kodiert sein, so dass die Absolutlage P innerhalb jedes der Teile 7 eindeutig feststellbar ist. Die Menge der Messlagewerte eines jeden Teils 7 kann dabei identisch sein. Die Absolutlage des Körpers 6 über mehrere Teile 7 hinweg kann durch Ermittlung der passierten Diskontinuitäten 9 bei einer Bewegung des Körpers 6 ermittelt werden. Ferner können die Teile 7 individuelle Identifikationsdaten umfassen. Alternativ können die Teile 7 so kodiert sein, dass sie bis auf die Diskontinuitäten 9 eine durchgehend kodierte Absolutlage P repräsentieren.

Fig. 2 zeigt mit den Sensoren 3, 4 aufgenommene Messlagewerte W des Absolutwertgebers 1 des Ausführungsbeispiels der Fig. 1.

In der Fig. 2 sind mögliche Messlagewerte W des Drehgebers 1 des Ausführungsbeispiels der Fig. 1 in einem Koordinatensystem dargestellt. Aufgenommene gültige Messlagewerte W des Sensors 3 sind als durchgezogene und des Sensors 4 als gestrichelte Abschnitte gezeigt. Auf der X-Achse des Koordinatensystems ist die tatsächliche, physikalische Absolutlage P der Welle 6 aufgetragen und auf der Y-Achse die abgeleiteten Absolutlagewerte L. In der gezeigten Darstellung überfährt der Sensor 3 fünf Teile 7 der Maßverkörperung 5 des Ausführungsbeispiels der Fig. 1. Dies entspricht einer Rotation des Körpers 6 um seine Längsachse Z um etwa 450°.

Die Bestimmung der Absolutlagewerte L anhand der ermittelten Messlagewerte W ist beispielhaft an zwei Stützstellen 10, 11 gezeigt. An der Stützstelle 10 befindet sich der Sensor 3 über einem der Teile 7 bzw. über dessen Kodierabschnitt. Der Messlagewert W kann eindeutig dem dazugehörigen Absolutlagewert L zugeordnet werden. In der Stützstelle 11 ist der Körper 6 weiter verdreht, so dass der Sensor 3 über einer als eine Lücke ausgeformten Diskontinuität 9 angeordnet ist und keine gültigen Messlagewerte W aus der Maßverkörperung 5 ablesen kann. Der zweite Sensor 4 ist jedoch über dem Kodierabschnitt des durch den Sensor 3 vor der Drehung ausgelesenen Teiles 7 angeordnet und liefert einen gültigen Messlagewert W.

Zur Bestimmung des Absolutlagewertes L des Körpers 6 nach der Drehung und mit Bezug auf den Sensor 3 wird der an der Stützstelle 11 aufgenommene Messlagewert W in einen vorläufigen Absolutlagewert L umgerechnet, dem anschließend zur Bestimmung des wahren Absolutlagewerts L mit Bezug auf den Sensor 3 ein Offsetwert A hinzugefügt wird. Der Offsetwert A entspricht im gezeigten Ausführungsbeispiel dem Abstand der beiden Sensoren 3, 4 zueinander entlang des Messweges M und kann in Absolutlagewerten L oder Messlagewerten W im Absolutwertgeber 1 gespeichert sein.

Die Messlagewerte W der Sensoren 3, 4 liegen hier jeweils auf einer Geraden. Dies bedeutet, dass die Enden der Kodierabschnitte zweier Teile 7 entsprechend deren wahren, physikalischen Abstand zueinander kodiert sind. Die Diskontinuität 9 entsteht hier also ausschließlich durch das Fehlen von Messlagewerten W in der Lücke zwischen den Teilen 7.

Die Differenz der kodierten Messlagewerte W im Bereich der Enden 8 der aufeinanderfolgenden Teile 7 kann jedoch auch größer oder kleiner sein als der wahre Abstand, was zu einer Sprungstelle führt. Die einzelnen und zu jeweils einem der Teile 7 zugeordneten Abschnitte der Messlagewerte W lägen in einem solchen Fall nicht miteinander fluchtend auf einer Geraden, sondern würden parallel versetzt zu dieser Geraden angeordnet sein. Zumindest in einem solchen Fall wäre ein Trainingslauf zum Einlernen der Relation zwischen den bestimmten Messlagewerten W und den Absolutlagewerten L bzw. der Absolutlagen P durchzuführen. Die Länge der Diskontinuität 9, zum Beispiel der Lücke, entlang des Messweges M kann ebenfalls variieren, was zusätzlich zu einer Verschiebung der die Messlagewerte W repräsentierenden linienförmigen Abschnitte entlang der Geraden führen kann. Weitere Fehlerquellen, wie etwa ein lokales Dehnen oder Verdrehen der Maßverkörperung 5 bei deren Montage oder durch Umwelteinflüsse, können Lage oder Ausrichtung der Abschnitte gültiger Messlagewerte W oder die Größe der Diskontinuität 9 beeinflussen.

Um zu bestimmen, welcher der Sensoren 3, 4 zur Bestimmung der Absolutlage P verwendet werden soll, kann die Plausibilität der Messlagewerte W eines der Sensoren 3, 4 ermittelt werden. Sind die Messlagewerte W des einen Sensors 3, 4 nicht plausibel, zum Beispiel ungültig oder vollständig fehlend, so können die Messlagewerte W des anderen Sensors 4, 3 verwendet und mit dem Offsetwert A verknüpft werden. Alternativ oder zusätzlich können Messlagewerte W eines der Sensoren 3, 4 nur für eine vorbestimmte Menge von Messlagewerten W ausgewertet werden. Außerhalb dieser Menge von Messlagewerten W können die abgetasteten Messlagewerte W des anderen Sensors 4, 3 verwendet werden.

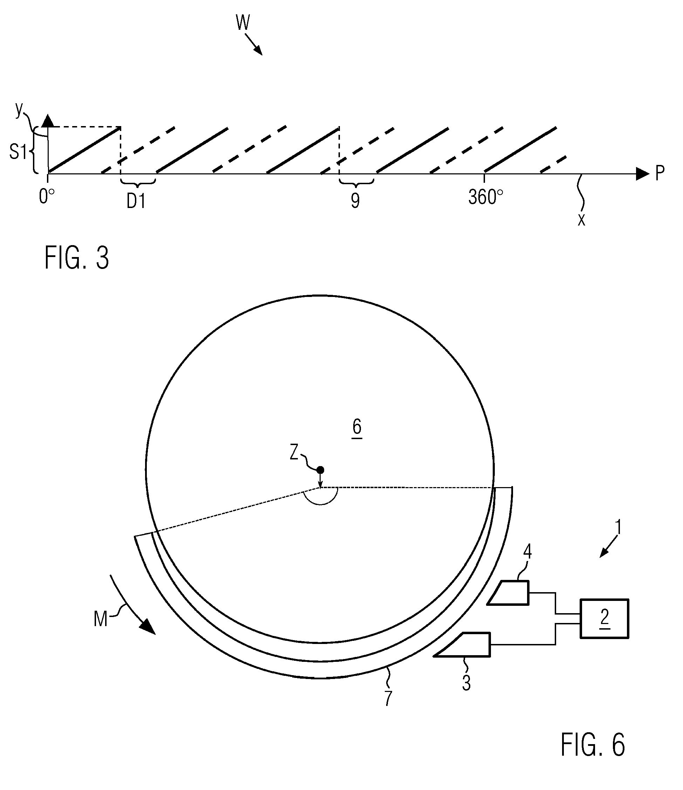

Fig. 3 zeigt ein weiteres Ausführungsbeispiel, wobei für Elemente, die in Funktion und/oder Aufbau den Elementen des Ausführungsbeispiels der Fig. 1 oder 2 entsprechen, dieselben Bezugszeichen verwendet werden. Der Kürze halber wird lediglich auf die Unterschiede zu den Ausführungsbeispielen der Fig. 1 und 2 eingegangen.

In der Fig. 3 sind Messlagewerte W dargestellt, wobei die Teile 7 des Ausführungsbeispiels der Fig. 1 alle identisch kodiert sind.

Im Unterschied zum Ausführungsbeispiel der Fig. 2 ist es zum Bestimmen des Absolutlagewerts L notwendig, dass der Absolutwertgeber 1 über Informationen über das jeweils abgetastete Teil 7 verfügt. Da die Teile 7 identisch kodiert sind, kann der Absolutwertgeber 1 diese Information beispielsweise durch Auszählen der passierten Diskontinuitäten 9 selbst ermitteln. Bei einem Übergang von einem Teil 7 zu einem anderen Teil 7, z.B. nach einer Lücke D1, springt die Kodierung an einer Sprungstelle S1 um beispielsweise 1000 Messlagewerte oder auch Einheiten.

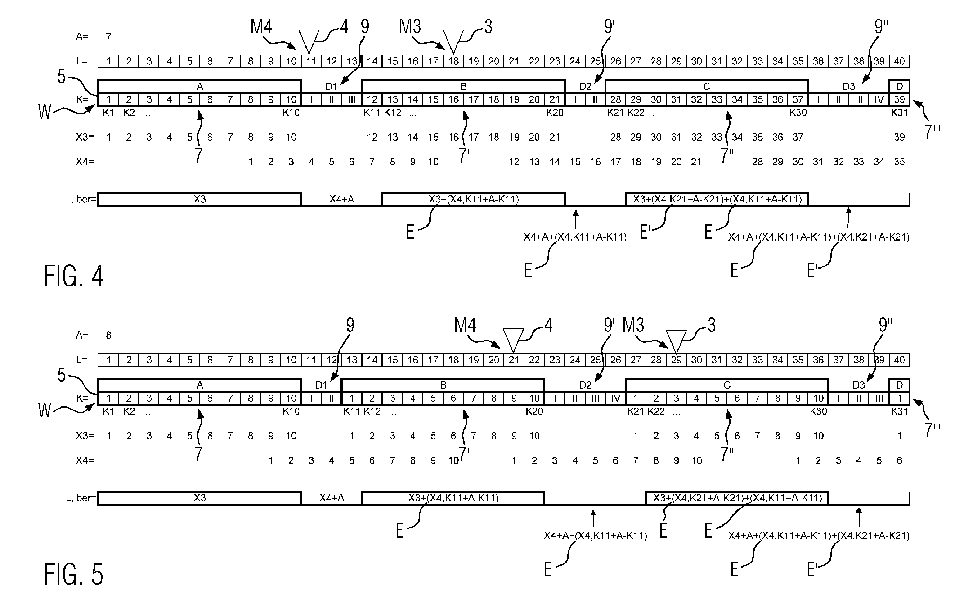

Fig. 4 zeigt eine schematische Darstellung eines Ausführungsbeispiels eines Verfahrens zur Bestimmung von Absolutlagen P anhand von Messlagewerten W, die mit einem Absolutwertgeber 1 gemäß den Ausführungsbeispielen der Fig. 1 und 2 ausgeformt ist. Die Diskontinuitäten 9 der Fig. 4 weisen neben Lücken D zusätzlich Sprungstellen S auf.

Der Abstand der beiden Sensoren 3, 4 beträgt im gezeigten Ausführungsbeispiel sieben Messlagewerte W oder Einheiten, so dass der Offsetwert A gleich sieben ist. Die Sensoren 3, 4 sind an Messstellen M3, M4 mit Bezug auf die Maßverkörperung 5 angeordnet. In der Zeile L sind Absolutlagewerte L aufgetragen. In der Zeile K ist die Kodierung der Maßverkörperung 5 mit vier Teilen 7, 7', 7", 7'" dargestellt, die jeweils einem Kodierabschnitt A, B, C, D aufweisen. Zwischen den Teilen 7, 7', 7", 7'" sind Diskontinuitäten 9, 9', 9" angeordnet. Je eine der Diskontinuitäten 9, 9', 9" umfasst eine Lücke D1, D2, D3, durch welche die Teile 7, 7', 7", 7"' voneinander beabstandet entlang des Messweges M angeordnet sind. Die Lücke D1 beträgt drei Einheiten, die Lücke D2 zwei Einheiten und die Lücke D3 vier Einheiten. Ferner ist die Diskontinuität 9 mit einer Sprungstelle in Größe von minus zwei Einheiten ausgebildet. Die Diskontinuität 9' umfasst eine Sprungstelle von vier Einheiten und die Diskontinuität 9" von minus drei Einheiten.

Die Kodierabschnitte A, B, C, D umfassen unterschiedliche Mengen von Messlagewerten W, wobei das Teil 7 mit einem Messlagewert W von 1 beginnt, der an einer Position K1 angeordnet ist. In der der Position K1 folgenden Position K2 ist der Messlagewert W gleich zwei. Aufeinanderfolgende Positionen Kn sind bei allen Teilen 7, 7', 7", 7"' jeweils mit aufeinanderfolgenden Messlagewerten W versehen.

In den Zeilen X3, X4 sind die durch die beiden Sensoren 3, 4 erfassten Messlagewerte W beim Überfahren der Maßverkörperung 5 dargestellt. Im Bereich der Lücken D1, D2, D3 erfassen die Sensoren 3, 4 keine Messlagewerte W, da diese hier nicht vorhanden sind. Durch den Abstand von sieben Einheiten zwischen den Sensoren 3, 4 sind die abgenommenen Messlagewerte W der beiden Sensoren 3, 4 jedoch um den Offsetwert von sieben zueinander versetzt, so dass Lücken D1, D2, D3 in den abgetasteten Messlagewerten X3 von Messlagewerten W in der Zeile X4 überbrückt werden.

In der Zeile L,ber ist beispielhaft eine Rechenvorschrift für die Umrechnung der abgetasteten Messlagewerte W in Absolutlagewerte L gezeigt. Die Absolutlage P des Körpers 6 soll hier mit Bezug auf den Sensor 3 bestimmt werden. Überfährt der Sensor 3 den Kodierabschnitt A, so können die von ihm abgenommenen Messlagewerte W, X3 direkt den Absolutlagewerten L zugeordnet werden oder entsprechen. Beispielsweise ist das Teil 7 ein erstes oder Referenzteil.

In der Lücke D1 nimmt der Sensor 3 keine Messlagewerte W wahr, so dass sich die Messlagewerte L aus den abgenommenen Messlagewerten W, X4 des Sensors 4, denen der Offsetwert A hinzuaddiert wird, bestimmt. Diese Lagekorrektur kann auch an der Position K11 der Kodierung K durchgeführt werden. Der so berechnete Wert ist hier als W, X4, K11 bezeichnet.

Bereits ab der Position K12 können wieder abgenommene Messlagewerte W, X3 des Sensors 3 verwendet werden. Da die Diskontinuität 9 jedoch nicht nur eine Lücke D1, sondern auch eine Sprungstelle aufweist, ist auch der durch die Sprungstelle hervorgerufene Fehler zu kompensieren. Folglich ist dem abgenommenen Messlagewert W, X3 ein Kompensationsfaktor E hinzuzufügen. Der Kompensationsfaktor E setzt sich aus dem an der Stelle K11 durch den Sensor 4 abgelesenen Messlagewert W, X4, K11, dem Offsetwert A und dem an der Stelle K11 gültigen Messlagewert W zusammen, wobei der Wert W, X, K11 zum Offsetwert A hinzuaddiert und der Messlagewert W der Stelle K11 hiervon subtrahiert wird.

In der Diskontinuität 9' ist der abgenommene Messlagewert W, X4 des Sensors 4 mit dem Offsetwert A sowie mit dem Kompensationsfaktor E additiv zu verknüpfen. Dies kann auch in der Stelle K21 vorgenommen werden. Beispielsweise ab der Stelle K22 kann der durch den Sensor 3 abgenommene Messlagewert W, X3 mit dem Offsetwert A, dem Kompensationsfaktor E sowie mit einem weiteren Kompensationsfaktor E' additiv verknüpft werden. Der weitere Kompensationsfaktor E' kann analog zum Faktor E aufgebaut sein, wobei die jeweiligen Messlagewerte W auf das aktuelle Teilstück 7" der Maßverkörperung 5 bezogen sind - der an der Stelle K21 durch den Sensor 4 abgenommene Messlagewert W, X4, K21 wird mit dem Offsetwert A additiv verknüpft und der Wert der Stelle K21 hiervor subtrahiert.

In der Lücke D3 der Diskontinuität 9" sowie an der Stelle K31 kann wieder der durch den Sensor 4 abgenommene Messlagewert W, X4 mit dem Offsetwert A additiv verknüpft werden. Ferner werden die beiden Kompensationsfaktoren E, E' mit dem Messlagewert W, X4 verknüpft.

Auch die durch die Sensoren 3, 4 von weiteren Teilen 7 der Maßverkörperung 5 abgetastete Messlagewerte W, X3, X4 können analog lagekorrigiert und in Absolutlagewerte L umgerechnet werden.

Fig. 5 zeigt eine schematische Darstellung eines Ausführungsbeispiels eines Verfahrens zur Bestimmung von Absolutlage P anhand von Messlagewerten W, bei dem die Teile 7 der Maßverkörperung 5 wie in der Fig. 3 gezeigt identisch kodiert sind.

Der Abstand A der beiden Sensoren 3, 4 zueinander beträgt hier 8 Messlagewerte W oder Einheiten.

Die jeweiligen Teile 7, 7', 7", 7'" sind durch Diskontinuitäten 9, 9',9" und insbesondere von Lücken D1, D2, D3 voneinander getrennt entlang des Messweges M angeordnet. Die Lücke D1 beträgt zwei Einheiten, die Lücke D2 vier und die Lücke D3 drei Einheiten. Beim Übergang von einem Teil 7, 7', 7", 7"' zu einem anderen Teil 7, 7', 7", 7'" beträgt die Sprungstelle minus zehn Einheiten. Die Zeilen X3, X4 zeigen wieder abgenommene Messlagewerte W an. In der Zeile L,ber ist wieder beispielhaft eine für die Lagekorrektur und die Bestimmung des Absolutlagewerte L anhand der abgenommenen Messlagewerte X3, X4 verwendete Rechenvorschrift gezeigt. Die im Ausführungsbeispiel der Fig. 4 gezeigte Rechenvorschrift kann auch im Ausführungsbeispiel der Fig. 5 Anwendung finden.

Fig. 6 zeigt ein weiteres Ausführungsbeispiel des erfindungsgemäßen Absolutwertgebers 1, wobei für Elemente, die in Funktion und/oder Aufbau den Elementen der Ausführungsbeispiele der Fig. 1 bis 5 entsprechen, dieselben Bezugszeichen verwendet werden. Der Kürze halber wird lediglich auf die Unterschiede zu den Ausführungsbeispielen der Fig. 1 bis 5 eingegangen.

Im Ausführungsbeispiel der Fig. 6 ist nur ein Teil 7 der Maßverkörperung 5 am Körper 6 montiert dargestellt. Weitere Teile 7 können bereits montiert sein oder später noch montiert werden. Alternativ kann die Maßverkörperung 5 nur ein Teil 7 umfassen Die dargestellte Position des Teils 7 ist senkrecht zum Messweg M bzw. zum Körper 6 fehlmontiert gezeigt, wodurch die ausgelesenen Messlagewerte W nicht mehr ohne Weiteres der Absolutlage P zugeordnet werden können.

Im gezeigten Ausführungsbeispiel ist das Teil 7 radial versetzt von der Längsachse Z des Körpers 6 angeordnet. Um die Absolutlage P dennoch genau bestimmen zu können, kann es notwendig sein, die Abweichung der Montageposition des Teils 7 von der Sollposition entlang des Messweges M zu bestimmen. Gerade bei schwer zugänglichen oder sehr großen Körpern 6 kann es jedoch schwierig sein, diese Abweichung z.B. mit Hilfe von dedizierten Vorrichtungen genau zu bestimmen. Eine solche Aufgabe kann sich auch ohne mit der Diskontinuität 9 in Zusammenhang stehende Probleme ergeben.

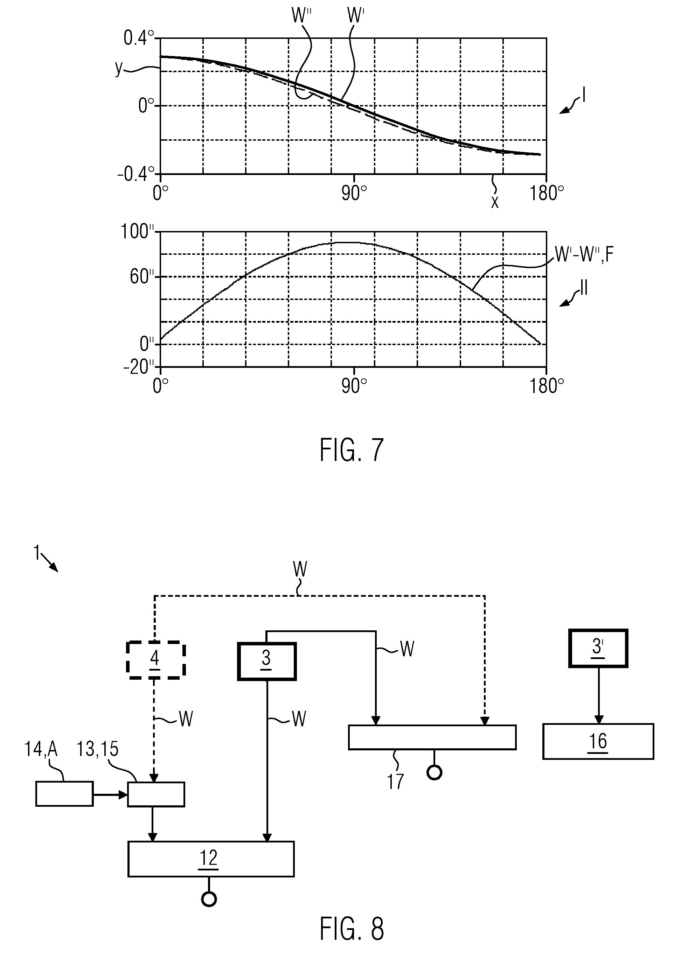

Zur Bestimmung der Fehlmontage kann beispielsweise der erfindungsgemäße Absolutwertgeber 1 verwendet werden. Hierzu kann das Teil 7 entlang des Messweges M an den Sensoren 3, 4 vorbeibewegt werden und diese zur Bestimmung der Art und Größe der Fehlmontage beide gleichzeitig Messlagewerte W vom Teil 7 abnehmen und zur Auswerteeinheit 2 weiterleiten. In der Auswerteeinheit 2 können die gemessenen Messlagewerte W der beiden Sensoren 3, 4 miteinander verglichen werden, woraus sich ein für die Art und Größe der Fehlmontage repräsentatives Fehlersignal F ergibt, das in der Fig. 7 dargestellt ist.

Die Fig. 7 zeigt verarbeitete Messlagewerte W und W", die jeweils von einem der Sensoren 3, 4 stammen. Die Messlagewerte W' des Sensors 4 sind durch Verknüpfung mit dem Offsetwert A lagekorrigiert. Beispielsweise kann der Offsetwert A dem durch den Sensor 4 bestimmten Messlagewert W hinzuaddiert sein. Werden Messlagewerte W unterschiedlicher Teile 7 verwendet, ist zur Lagekorrektur noch der die Diskontinuität 9 berücksichtigende Kompensationsfaktor K zu verwenden. Durch diese Lagekorrektur der Messlagewerte W, W' können diese direkt miteinander verglichen werden.

Im Graphen I der Fig. 7 ist die Abweichung der bestimmten Messlagewerte W, W' von einem idealen Verlauf von erwarteten zu messenden Messlagewerten dargestellt. Es ist erkennbar, dass die lagekorrigierten Messlagewerte W, W' zu Beginn, d.h. bei beispielsweise 0°, dicht beieinander liegen. Diese Messlagewerte W', W' können im Bereich eines der Enden 8 des Teils 7 aufgenommen sein, das sehr nahe am Messweg M angeordnet ist. In ihrem Verlauf entfernen sich diese Messlagewerte W, W' bis zu einem maximalen Abstand bei etwa 90° voneinander, um dann bei etwa 180° wieder nah beieinander zu liegen. Der hier beispielhaft gezeigte Verlauf entspricht dem Radialversatz des Teils 7 der Fig. 6, wobei dessen Enden 8 nahe des Messweges M angeordnet sind und dessen Mitte einen maximalen Abstand zum Messweg M aufweist. Erstreckt sich das Teil 7 im idealen Montagezustand entlang des Messweges M, hier um 180° um den Körper 6, überlagern sich die Absolutlagerwerte W', W" der Sensoren 3, 4.

Im Graphen II der Fig. 7 ist als Fehlersignal F die Differenz der Abweichung der Messlagewerte W', W" von den idealen Messlagewerten dargestellt. Die gezeigte Kurve ist bei etwa 0° und 180° nahezu 0 und erreicht ihr Maximum bei 90°.

Je nach Form und Größe der Fehlmontage können die resultierenden Formverläufe der Abweichung der bestimmten Messlagewerte W, W' von den idealen Messlagewerten und auch die hieraus resultierende und des Fehlersignals F charakteristisch für die jeweilige Fehlmontage sein. Zur Bestimmung der Art und Größe der vorliegenden Fehlmontage können, etwa bei der Inbetriebnahme des Absolutwertgebers, die ermittelten Kurven einem Benutzer oder Monteur repräsentiert oder durch den Absolutwertgeber 1 automatisch ausgewertet werden.

Fig. 8 zeigt ein weiteres Ausführungsbeispiel des erfindungsgemäßen Absolutwertgebers 1, wobei für Elemente, die in Funktion und/oder Aufbau den Elementen der Ausführungsbeispiele der bisherigen Figuren entsprechen, dieselben Bezugszeichen verwendet werden. Der Kürze halber wird lediglich auf die Unterschiede zu den Ausführungsbeispielen der bisherigen Figuren eingegangen.

Fig. 8 zeigt den Absolutwertgeber 1 schematisch mit diversen Funktionseinheiten. Die Funktionseinheiten können dabei als separate Elemente oder als Funktionen eines einzelnen Elementes, beispielsweise der Auswerteeinheit 2, ausgebildet sein. Alternativ oder zusätzlich kann jede der Funktionseinheiten als Software realisiert sein.

Die beiden Sensoren 3, 4 können signalübertragend mit einer Absolutlagewertausgabeeinheit 12 des Absolutwertgebers 1 verbunden sein, wobei die Messlagewerte W eines der Sensoren 3, 4, beispielsweise des ersten Sensors 3, unverändert an die Absolutlagewertausgabeeinheit 12 geleitet werden können. Der in einem Abstand zum Sensor 3 angeordnete zweite Sensor 4 kann zunächst signalübertragend mit einer Lagekorrektureinheit 13 verbunden sein und die von ihm ermittelten Messlagewerte W an diese Einheit 13 übertragen. Die Lagekorrektureinheit 13 kann datenübertragend mit einer Speichereinheit 14 verbunden sein, in welcher der Offsetwert A fest gespeichert sein kann. In der Lagekorrektureinheit 13 kann der Kompensator 15 vorgesehen sein, der die bestimmten Messlagewerte W zumindest mit dem Offsetwert A verknüpft und diese beispielsweise miteinander addiert. Als Resultat dieser Verknüpfung kann die Lagekorrektureinheit 13 die lagekorrigierten Messlagewerte W des Sensors 4 an die Absolutlagewertausgabeeinheit 12 ausgeben.

Die Absolutlagewertausgabeeinheit 12 kann basierend auf vorgegebenen Messlagewerten W oder anhand einer Plausibilitätsprüfung eines der zugeführten Messlagewerte W selbsttätig entscheiden, welche der zugeführten Messlagewerte W zur Bestimmung der Absolutlage P verwendet werden sollen. Alternativ kann zwischen der Absolutlagewertausgabeeinheit 12 und den Sensoren 3, 4 eine hier nicht dargestellte Inspektionseinheit angeordnet sein, der die Messlagewerte W beider Sensoren 3, 4 zugeführt sind und welche nur einen der beiden Messlagewerte W nach deren Prüfung zur Bestimmung der Absolutlage P an die
Absolutlagewertausgabeeinheit 12 ausgibt.

Um passierende Diskontinuitäten 9 erkennen zu können, kann ein weiterer Sensor 3' vorgesehen sein. Alternativ kann die Funktion des weiteren Sensors 3' durch einen der Sensoren 3, 4 erfüllt werden. Passiert eine der Diskontinuitäten 9 den weiteren Sensor 3', so erkennt dieser die passierende Diskontinuität 9 und gibt ein Signal an einen nichtflüchtigen Speicher 16 aus. Im nichtflüchtigen Speicher 16 kann das Passieren der Diskontinuitäten 9 dokumentiert werden. Hierdurch kann beispielsweise die Funktion eines sogenannten Multiturn-Drehgebers abgebildet sein. Ferner können die jeweils von den Sensoren 3, 4 gerade abgetasteten Teile 7 identifiziert werden.

Um die Absolutlage P des Körpers 6 mit Bezug auf die Sensoren 3, 4 auch erkennen zu können, wenn der Körper 6 im ausgeschalteten Zustand des Absolutwertgebers 1 entlang des Messweges M bewegt wurde, kann der weitere Sensor 3' als ein Generator und zum Beispiel als ein sogenannter Mikrogenerator ausgebildet sein. Beim Passieren der Diskontinuität 9 kann der Generator auch im ausgeschalteten Zustand des Absolutwertgebers 1 ein Signal generieren, das im nichtflüchtigen Speicher 16 dokumentierbar ist. Die Diskontinuität 9, insbesondere die Lücke D1, D2, D3, kann zumindest ein den Mikrogenerator betätigendes Element, zum Beispiel einen Magneten, umfassen.

Soll auch die Fehlmontage der Maßverkörperung 5 mit Hilfe des Absolutwertgebers 1 erkannt werden, kann dieser eine Prüfeinheit 17 umfassen. Der Prüfeinheit 17 können die Messlagewerte W beider Sensoren 3, 4 eingangsseitig zugeführt werden. In der Prüfeinheit 17 kann ein für die Art und Größe der Fehlmontage repräsentatives Fehlersignal F erzeugt und anschließend ausgegeben werden. Zum Beispiel können die ermittelten Messlagewerte W mit idealen Messlagewerten in der Prüfeinheit 17 verglichen werden. Dabei kann das repräsentative Signal wie in der Beschreibung zum Ausführungsbeispiel der Fig. 7 dargestellt erzeugt werden. Alternativ können die ermittelten und lagekorrigierten Messlagewerte W direkt ausgewertet werden oder von den Messlagewerten W der beiden Sensoren 3, 4 abgeleitete Relativgeschwindigkeiten zwischen den Sensoren 3, 4 und dem Körper 6 entlang des Messweges M ermittelt werden. Die ermittelten Geschwindigkeiten können ebenfalls zur Bestimmung des die Fehlmontage repräsentierenden Signals F verwendet und hierzu beispielsweise voneinander subtrahiert werden. Die Prüfeinheit 17 kann signalübertragend mit dem Kompensator 15 oder der Absolutlagewertausgabeeinheit 12 verbunden sein, so dass durch die Fehlmontage der Maßverkörperung 5 womöglich entsprechende Ungenauigkeiten der Absolutlagebestimmung ausgeglichen werden können.

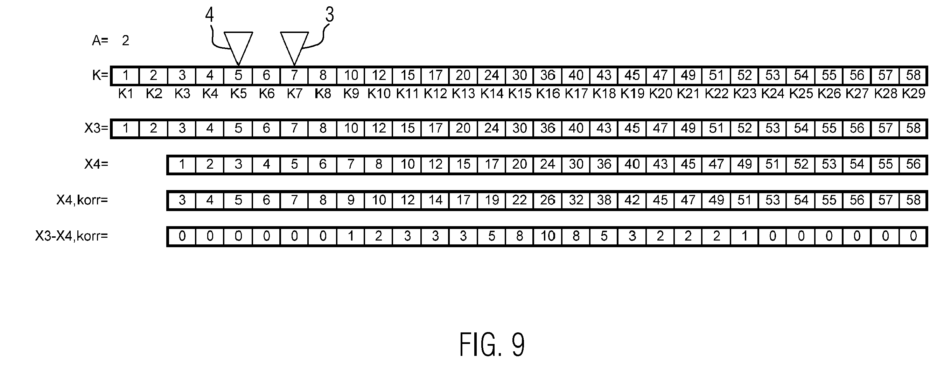

Fig. 9 zeigt ein Ausführungsbeispiel eines Verfahrens zur Bestimmung der Fehlmontage der Maßverkörperung 5.

Im Ausführungsbeispiel der Fig. 9 ist die Maßverkörperung 5 in einem mittleren Bereich fehlmontiert und wölbt sich beispielsweise vom Messweg M in Richtung auf die Sensoren 3, 4. Dieses Ausführungsbeispiel ähnelt dem Ausführungsbeispiel der Fig. 6.

Im Bereich der Kodierungspositionen K1 bis K8 und K22 bis K29 ist die Maßverkörperung 5 entlang des Messweges M angeordnet. Im Bereich der Positionen K9 bis K20 weicht die Position der Maßverkörperung 5 vom Messweg M senkrecht zu diesem ab. Hierdurch erscheinen aus Sicht der Sensoren 3, 4 nebeneinander liegende Messlagewerte W dichter beieinander, was im Betrieb zu einer schnelleren Änderung der Messlagewerte W im Bereich der Positionen K9 bis K20 führen kann und durch Auslassung von Messlagewerten W dargestellt ist.

Der Abstand der Sensoren 3, 4 beträgt in diesem Ausführungsbeispiel lediglich 2 Einheiten. In der Zeile X3 sind die durch den Sensor 3 abgetasteten Messlagewerte W dargestellt, in der Zeile X4 die durch den Sensor 4 abgetasteten Messlagewerte W. In der Zeile X4,korr sind Lagekorrigierte und durch den Sensor 4 abgenommene Messlagewerte W, X4 dargestellt. Zur Lagekorrektur der abgenommenen Messlagewerte W, X4 wird diesen der Offsetwert A hinzugefügt.

In der Zeile X3 - X4,korr sind die lagekorrigierten und durch den Sensor 4 abgetasteten Messlagewerte W, X4 von den durch den Sensor 3 abgetasteten Messlagewerten W, X3 subtrahiert. Solange die Maßverkörperung 5 entlang des Messweges M verläuft, also im Bereich der Positionen K1 bis K8 und K24 bis K29, ist die Differenz der lagekorrigierten Messlagewerte W konstant und insbesondere 0. Im Bereich der Positionen K9 bis K23 weicht diese Differenz jedoch von dem konstanten Wert ab, wobei die Differenz an der Position K16 ihr Maximum erreicht. Anhand der Form des sich aus den Differenzwerten ergebenden Fehlerfunktion kann sowohl Größe als auch Form der Fehlmontage ermittelt werden.

## Patentansprüche

1. Absolutwertgeber (1) zur Bestimmung einer Absolutlage (P) eines Körpers (6) relativ zum Absolutwertgeber (1), mit wenigstens einer sich entlang eines Messweges (M) erstreckenden Maßverkörperung (5), die eine Kodierung (K) der Absolutlage (P) mit Messlagewerten (W) aufweist, und mit wenigstens zwei Sensoren (3, 4), durch die im Betrieb die Kodierung (K) abtastbar ist, **dadurch gekennzeichnet, dass** die Kodierung (K) in ihrem Verlauf wenigstens eine Diskontinuität (9) aufweist.

2. Absolutwertgeber (1) nach Anspruch 1, **dadurch gekennzeichnet, dass** die Diskontinuität (9) eine Lücke (D1, D2, D3) in der Maßverkörperung (5) und/oder eine Sprungstelle in der Kodierung (K) umfasst.

3. Absolutwertgeber (1) nach Anspruch 1 oder 2, **dadurch gekennzeichnet, dass** die Kodierung (K) aus mehreren Kodierabschnitten (A, B, C, D) zusammengesetzt ist, die entlang des Messweges (M) hintereinander angeordnet sind und von denen wenigstens zwei durch die Diskontinuität (9) voneinander getrennt sind wobei vorzugsweise die Kodierabschnitte (A, B, C, D) identisch kodiert sind.

4. Absolutwertgeber (1) nach Anspruch 4, **dadurch gekennzeichnet, dass** die Kodierabschnitte (A, B, C, D) als separate einstückige Teile (7) der Maßverkörperung (5) ausgeformt sind und an wenigstens einem Übergang zwischen zwei Teilen (7) die Diskontinuität (9) angeordnet ist.

5. Absolutwertgeber (1) nach einem der vorhergehenden Ansprüche, **dadurch gekennzeichnet, dass** der Absolutwertgeber (1) einen Kompensator (15) zur Kompensation der Diskontinuität (9) aufweist, wobei der Kompensator (15) signalübertragend eingangsseitig mit den Sensoren (3, 4) und ausgangsseitig mit einer Absolutlagewertausgabeeinheit (12) des Absolutwertgebers (1) verbunden ist.

6. Absolutwertgeber (1) nach Anspruch 5, **dadurch gekennzeichnet, dass** die Sensoren (3, 4) entlang der Maßverkörperung (5) beabstandet zueinander angeordnet sind, wobei der Abstand der Sensoren (3, 4) zueinander zumindest der Ausdehnung der Diskontinuität (9) in Richtung der Maßverkörperung (5) entspricht, und dass der Kompensator (15) eine Speichereinheit (14) sowie eine Addiereinheit aufweist, wobei in der Speichereinheit (14) der Abstand der Sensoren (3, 4) zueinander gespeichert ist und die Addiereinheit eingangsseitig datenübertragend mit der Speichereinheit (14) und signalübertragend mit zumindest einem der Sensoren (3, 4) sowie ausgangsseitig mit der Absolutlagewertausgabeeinheit (12) des Absolutwertgebers (1) verbunden ist.

7. Absolutwertgeber (1) nach einem der vorhergehenden Ansprüche,
**gekennzeichnet durch** einen Sensor (3') und einen mit diesem signalübertragend verbundenen nichtflüchtigen Speicher (16), an den der Sensor (3) ein Signal ausgibt, wenn er die Diskontinuität (9) passiert.

8. Absolutwertgeber (1) nach Anspruch 7, **dadurch gekennzeichnet, dass** der Sensor (3') einen Betriebsenergie für den Speicher (16) erzeugenden Generator umfasst.

9. Absolutwertgeber (1) nach einem der vorhergehenden Ansprüche, **dadurch gekennzeichnet, dass** der Absolutwertgeber (1) eine Prüfeinheit (17) zur Erkennung von Montagefehlern der Maßverkörperung (5) insbesondere senkrecht zu deren Verlauf aufweist, wobei die Prüfeinheit (17) eingangsseitig signalübertragend mit den Sensoren (3, 4) verbunden und an ihrem Signalausgang ein für den Montagefehler repräsentatives Fehlersignal (F) ausgebbar ist.

10. Absolutwertgeber (1) nach Anspruch 9, **dadurch gekennzeichnet, dass** die Prüfeinheit (17) ein Subtraktionsmodul aufweist, an dessen Signalausgang im Betrieb von den Sensoren (3, 4) abgetastete Messlagewerte (W) lagekorrigiert und voneinander subtrahiert anliegen.

11. Verfahren zur Bestimmung eine Absolutlage (P) zweier Körper (3, 4, 6) relativ zueinander, bei dem eine Messlagewerte (W) enthaltende Kodierung (K) der Absolutlage (P) mehrfach abgetastet und ein für die Absolutlage (P) repräsentatives Absolutlagesignal erzeugt und ausgegeben wird, **dadurch gekennzeichnet, dass** die Kodierung (K) in ihrem Verlauf eine Diskontinuität (9) aufweist und zur Bestimmung der Absolutlage (P) innerhalb der Diskontinuität (9) einer der Messlagewerte (W) der Kodierung (K) außerhalb der Diskontinuität (9) mit einem Offsetwert (A) verknüpft wird.

12. Verfahren nach Anspruch 11, **dadurch gekennzeichnet, dass** die Kodierung (K) gleichzeitig an einer ersten und einer zweiten Messstelle (M3, M4) abgetastet wird, wobei die Messstellen (M3, M4) entlang einer die Kodierung (K) tragenden Maßverkörperung (5) voneinander beabstandet angeordnet sind und der Offsetwert (A) dem Abstand der Messstellen (M3, M4) zueinander entspricht wobei vorzugsweise für eine vorbestimmte Menge von Messlagewerten (W) die Messlagewerte (W) der ersten Messstelle (M3, M4) und für andere Messlagewerte (W) die Messlagewerte (W) der zweiten Messstelle (M4, M3) für die Bestimmung der Absolutlage (P) verwendet werden.

13. Verfahren nach Anspruch 12, **dadurch gekennzeichnet, dass** die Plausibilität der Messlagewerte (W) der ersten Messstelle (M3, M4) geprüft wird und basierend auf dem Ergebnis der Prüfung die Messlagewerte (W) der zweiten Messstelle (M4, M3) zur Bestimmung der Absolutlage (P) verwendet werden.

14. Verfahren nach einem der Ansprüche 11 bis 13, **dadurch gekennzeichnet, dass** beim Passieren der Diskontinuität (9) ein Speicherwert einer nichtflüchtigen Speichereinheit (16) geändert wird.

15. Verfahren nach einem der Ansprüche 11 bis 14, **dadurch gekennzeichnet, dass** Montagefehler einer mit der Kodierung (K) versehenen und an einem der Körper (6) montierten Maßverkörperung (5) insbesondere senkrecht zur Maßverkörperung (5) erkannt werden, indem wenigstens zwei sich voneinander unterscheidende Messlagewerte (W) gleichzeitig abgetastet und einem Verarbeitungsschritt zugeführt werden, durch den ein für den Montagefehler repräsentatives Fehlersignal (F) erzeugt wird.
